# DEMANDE DE BREVET EUROPEEN

(11) **EP 0 713 040 A1**
(43) Date de publication de la demande: **22.05.1996**
(21) Numéro de dépôt: 95410105.1
(22) Date de dépôt: 12.09.1995
(51) Int. Cl.: F16L 3/137

(54) **Collier à cheville intégrée pour la fixation murale, d'un conduit ou tube**

(30) Priorité: 16.11.1994 FR 9413925
(71) Demandeur: SCHNEIDER ELECTRIC SA, F-92100 Boulogne-Billancourt (FR)
(72) Inventeur: Meyer, Jean-Claude, Schneider Electric, F-38050 Grenoble Cedex 09 (FR); Zinsius, Laurent, Schneider Electric, F-38050 Grenoble Cedex 09 (FR)
(74) Mandataire: Hecke, Gérard

(57) **Abrégé**

L'invention concerne un collier pour la fixation d'un conduit (1) sur un mur ou un plafond (3), dans une position bien définie et stable. Le collier est fait d'une seule pièce de matière synthétique moulée par injection, comprenant une embase généralement rectangulaire munie de brides d'attache 22a et 22b et d'une cheville 31. Un clou 13 moulé en une pièce avec le collier comporte une tête 19 qui appuie l'embase 5 contre le mur ou le plafond. La cheville 31 monobloc est rattachée directement au fond de l'embase 5, l'expansion de la cheville 31 étant rendue possible par la présence de fentes 40, 49 s'étendant axialement dans la cheville 31. La première fente 40 délimite extérieurement la languette élastique 38, alors que la deuxième fente 49 prolonge la première fente jusqu'au bout de la cheville 31.

## Description

La présente invention concerne un collier à cheville intégrée pour la fixation murale d'un conduit ou tube, formé d'un ensemble monobloc en matière synthétique injectée comprenant:
- une embase pourvue d'une ouverture centrale, d'une surface d'appui arrière destinée à être appliquée contre un élément de support, et d'une face avant destinée à servir d'appui audit conduit,
- deux brides souples rattachées chacune à un côté de l'embase et agencées pour coopérer pour entourer ledit conduit, les brides étant munies de moyens d'attache pour être liées l'une à l'autre de manière à former une boucle fermée,
- une cheville creuse agencée pour être engagée dans un trou de l'élément de support,
- et un clou d'expansion disposé dans l'ouverture centrale de l'embase et agencé pour être chassé dans la cheville, le clou étant rattaché à l'embase par une liaison arrachable.

Ce type de collier de fixation est utilisé couramment pour des installations électriques industrielles ou domestiques. L'embase est fixée contre une paroi murale ou un plafond ou tout autre élément de support approprié, au moyen de la cheville insérée dans un trou de l'élément de support. La cheville est fabriquée avec le collier en une seule pièce de matière synthétique moulée par injection.

Dans les colliers actuels de ce genre, l'embase est une petite plaque rectangulaire dont deux côtés sont rattachés aux brides, tandis que les deux autres côtés sont rattachés aux demi-chevilles par des parties amincies servant de charnières. Lorsque les demi-chevilles sont rabattues pour former la cheville, les zones des charnières dépassent latéralement de la cheville et constituent la surface de base qui bute contre l'élément de support. Il en résulte que la plaque de l'embase, raccordée à la cheville par ces parties flexibles, n'est pas appuyée très rigidement contre l'élément de support. Le conduit fixé au moyen de ce dispositif n'est par conséquent pas tenu d'une manière très stable. Ce manque de stabilité est renforcé parce que cet objet a une forme habituelle cylindrique et s'appuie contre cette plaque sensiblement plane par sa surface convexe. Ce manque de rigidité est particulièrement néfaste dans les cas où l'élément de support est fait d'un matériau relativement tendre ou friable, tel que le plâtre ou un matériau expansé, parce que les mouvements de l'objet peuvent conduire à une érosion du trou dans lequel est engagée la cheville, pouvant même aboutir à l'arrachement de cette dernière.

Un autre inconvénient de ces colliers connus, lorsqu'on les emploie pour fixer des tubes rigides pour conducteurs électriques, est que les tubes sont pratiquement plaqués contre le mur ou le plafond, et qu'il est difficile de les en écarter pour introduire leurs extrémités dans des boîtes de dérivation pourvues d'orifices normalisés prédécoupés. Il en résulte des difficultés de montage et un tracé sinueux et peu esthétique des tubes. Pour pallier ces inconvénients, on a créé un collier réalisé en deux pièces, à savoir une cheville pourvue d'une tête filetée ou analogue, et un petit socle pourvu de brides et se fixant sur la tête de la cheville. Toutefois, ce dispositif en deux pièces est plus compliqué, plus coûteux et demande plus de temps au montage.

La présente invention vise à éviter les inconvénients précités et à créer un type de collier polyvalent qui peut être fabriqué économiquement en une seule pièce, puis mis en place d'une manière rapide et simple, pour assurer une fixation rigide et commode des objets concernés, notamment de tubes ou de câbles de différents diamètres.

Le collier selon l'invention est caractérisé en ce que :
- l'embase est un bloc rigide ayant des parois latérales sensiblement perpendiculaires à sa surface d'appui et comporte, une surface concave adaptée audit conduit, et un logement agencé pour recevoir la tête du clou quand celui-ci est chassé dans la cheville,
- le clou d'expansion est pourvu de moyens de retenue agencés pour coopérer avec des moyens conjugués de la cheville pour retenir ledit clou dans ladite cheville.

De préférence, lesdites parois latérales comportent des bords arrière qui définissent ladite surface d'appui arrière, et deux des parois latérales, mutuellement opposées, présentent des bords avant incurvés formant ensemble ladite surface concave adaptée audit conduit. En particulier, l'embase peut avoir la forme d'une boîte sensiblement rectangulaire, ayant deux parois latérales longitudinales par rapport audit conduit, auxquelles sont rattachées respectivement les brides, et deux parois transversales ayant lesdits bords avant incurvés.

Ainsi, le conduit peut être lié rigidement à l'embrase par serrage sur la ou les surfaces concaves d'appui et l'embase peut être appuyée de façon stable contre l'élément de support, grâce à sa surface de base définie par des parois rigides. On conçoit que ces parois peuvent avoir toute configuration appropriée, notamment être suffisamment espacées les unes des autres pour offrir une assise assez large, aussi bien sur la face avant que sur la face arrière de l'embase.

Selon un premier mode de réalisation, la cheville est composée de deux demi-chevilles rattachées chacune à l'embase, et agencées pour être accouplées par encliquetage à leurs extrémités opposées. Le collier peut ainsi être fabriqué par moulage de la cheville à plat, sans nécessiter de moule à tiroirs.

Selon un deuxième mode de réalisation, la cheville est fabriquée par moulage en une seule pièce dans l'axe du clou d'expansion. La partie creuse de la cheville est engendrée dans le moule d'une broche qui se démoule en contre dépouille grâce à la présence de fentes axiales s'étendant le long de la cheville.

D'autres caractéristiques et avantages de la présente invention seront décrits plus en détail dans la description d'une forme de réalisation préférée, donnée à titre d'exemple non limitatif en référence aux dessins annexés, dans lesquels :
- la figure 1 est une vue en coupe transversale, suivant la ligne I-I de la figure 2, d'un collier selon l'invention, dans son état initial avant son utilisation pour fixer un conduit,
- la figure 2 est une vue en coupe du collier selon l'invention suivant la ligne II-II de la figure 1,
- la figure 3 est une vue en coupe d'une demi-cheville du collier selon l'invention suivant la ligne III-III de la figure 2,
- la figure 4 est une de détail en coupe d'une partie du collier selon l'invention à l'utilisation,
- la figure 5 est une vue analogue à la figure 4, illustrant une variante dans laquelle le collier selon l'invention est fixé au moyen d'une vis,
- la figure 6 est une vue de détail en coupe illustrant la fixation du collier selon l'invention dans un élément de support creux,
- la figure 7 est une vue identique de la figure 1 d'une variante de réalisation,
- la figure 8 montre une vue en coupe selon la ligne 8-8 de la figure 7,
- la figure 9 représente une vue à échelle agrandie et en coupe selon la ligne 9-9 de la figure 8,
- la figure 10 est une vue du collier selon la figure 7, après mise en place dans un élément de support creux, et enfoncement du clou d'expansion dans la cheville,
- la figure 11 est une vue identique de la figure 7 d'une autre variante de réalisation,
- la figure 12 montre le collier de la figure 11 après enfoncement du clou.

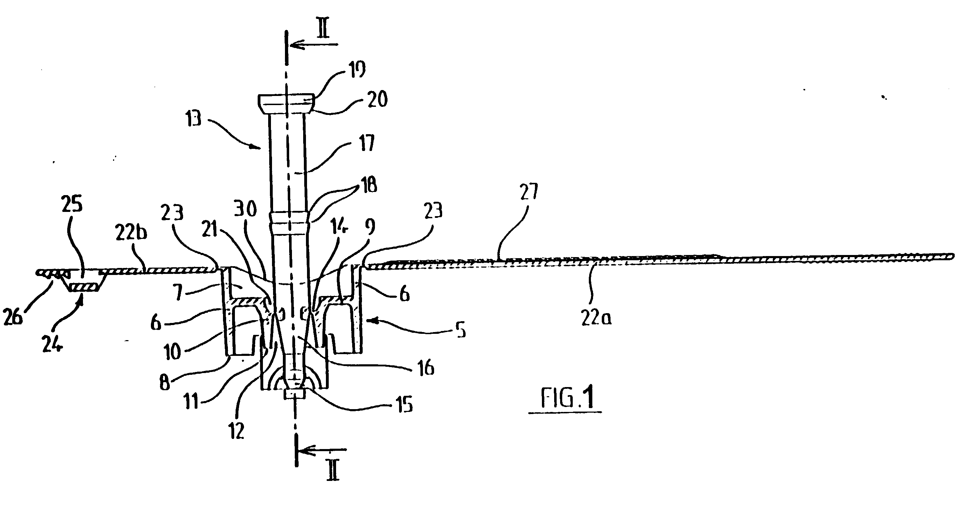

Le collier illustré par les figures 1 à 4 est un ensemble monobloc moulé d'une seule pièce en matière synthétique et destiné à fixer un conduit tel qu'un tube 1 contre une surface 2 d'un élément de support 3 tel qu'un mur ou un plafond. Un trou cylindrique 4 a été ménagé dans cet élément de support pour permettre le mise en place dudit collier.

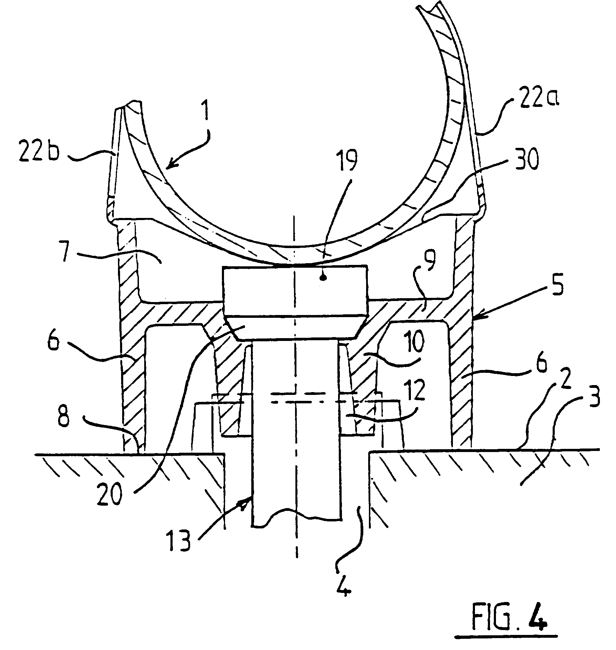

La partie centrale du collier est une embase 5 ayant la forme d'une boîte rigide sensiblement rectangulaire, avec des parois latérales longitudinales 6 et transversales 7 qui sont perpendiculaires à une surface d'appui arrière 8 de l'embase, destinée à être appliquée contre la surface 2 de l'élément de support 3. En fait, la surface d'appui arrière 8 est définie par les bords arrière des parois latérales 6 et 7. L'intérieur de l'embase 5 comporte une cloison intermédiaire 9 sensiblement parallèle à la surface d'appui arrière 8 et supportant un bloc intérieur rigide 10 dont l'extrémité intérieure 11, qui est la plus proche de la surface 2, se trouve légèrement en avant de la surface d'appui arrière 8 de l'embase 5. Le bloc intérieur 10 est traversé par une ouverture centrale 12 recevant un clou d'expansion 13 qui est moulé avec le reste du collier, mais peut en être détaché facilement par rupture d'un film 14 de faible épaisseur formant un pont qui le relie provisoirement au bloc 10, constituant ainsi une liaison arrachable. Le clou 13 a une pointe 15 de diamètre relativement petit, une partie conique 16 provoquant l'expansion de la cheville qui sera décrite plus loin, un fût cylindrique 17 pourvu de deux collerettes 18 à profil denté, et une tête élargie 19 à surface inférieure conique 20. Lors de l'utilisation, cette tête 19 s'ajuste dans un logement 21 de forme correspondant à cette tête, ménagé dans le bloc intérieur 10 à l'entrée de l'ouverture centrale 12, pour maintenir l'embase 5 en appui contre l'élément de support 3 (figure 4). Il est clair que les collerettes 18 constituant la denture extérieure du clou 13, peuvent être remplacées par tout moyen de retenue.

Deux brides souples 22a et 22b, destinées à former une boucle 22 et à attacher le tube 1 sur l'embase 5, sont rattachées aux bords supérieurs des parois longitudinales 6 de l'embase par des parties amincies 23 servant de charnières. Pour se fixer l'une à l'autre et former la boucle 22, les brides 22a et 22b comportent des moyens d'attache qui peuvent être d'un type connu. Dans l'exemple illustré par la figure 1, ces moyens comprennent un bloc de verrouillage 24 disposé à l'extrémité libre de la bride 22b, avec une ouverture 25 pour le passage de l'autre bride 22a, et des dents de verrouillage 26 coopérant avec une denture 27 de la bride 22a. D'autres moyens connus pourraient être prévus à la place de ces moyens d'attache, mais ceux-ci sont particulièrement avantageux par leur facilité d'emploi, leur grande efficacité et leur capacité d'adaptation à des objets de différents diamètres. Un de ces moyens est décrit dans la demande de brevet français n° 94 05193 de la demanderesse.

Les deux parois transversales 7 de l'embase 1 sont symétriques l'une de l'autre et ont chacune un bord avant 30 ayant un tracé incurvé ou en V entre les deux parois longitudinales 6, de sorte que ces deux bords semblables 30 définissent une surface concave pour maintenir en position le tube 1 ou tout autre objet allongé analogue quand il est serré contre l'embase par les brides 22a et 22b. En plus de sa fonction de maintien transversal, la forme concave de cette surface permet d'utiliser un même collier pour des tubes ou objets de différents diamètres, dans la mesure permise par les dimensions des brides 22a et 22b. Par exemple, un modèle de collier peut être prévu pour une gamme de diamètres normalisés de 16 à 32 mm et une autre modèle pour une gamme de diamètres normalisés de 40 à 63 mm. Par ailleurs, la figure 4 montre que la surface concave définie par les bords incurvés 30 est tangente à la surface extérieure de la tête 19 du clou 13, de sorte que le tube 1 assure un blocage de sécurité du clou.

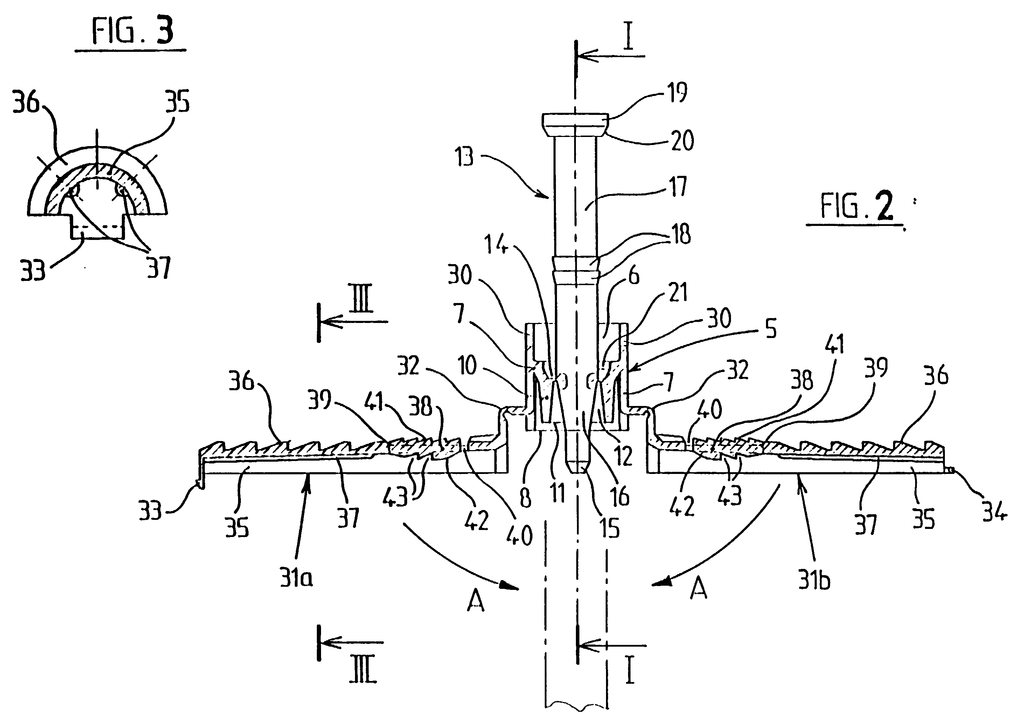

Comme on le voit sur la figure 2, chaque paroi transversale 7 de l'embase 5 porte une demi-cheville 31a, 31b qui lui est rattachée par une partie amincie 32 servant de charnière. De manière connue, les deux demi-chevilles 31a et 31b forment ensemble une cheville 31 lorsqu'elles sont rabattues à 90° vers l'arrière suivant les flèches A et fixées l'une à l'autre au moyen d'un crochet 33 et d'une anse 34 disposés à leur extrémité libre. De manière connue, la cheville ainsi formée présente un évidement central dans lequel on engage le clou 13 qui tend à élargir la cheville 31 par sa partie conique 16 et son fût cylindrique 17 pour bloquer la cheville dans le trou 4 (figure 4). A cet effet, chaque demi-cheville 31a, 31b comporte une partie distale 35 en forme de coque semi-circulaire (figure 3), ayant une denture extérieure 36 pour s'accrocher à l'élément de support et deux nervures longitudinales 37 pour assurer un appui élastique contre le clou 13. En arrière de cette partie distale 35, chaque demi-coquille 31a, 31b comporte d'autres moyens de blocage, sur une languette flexible 38 dont l'extrémité arrière 39 est rattachée à la partie distale 35, tandis que ses autres côtés sont séparés de la demi-cheville par une fente 40. Une seconde denture extérieure 41, plus fine que la première denture 35, est prévue sur la surface extérieure de chaque languette 38. La face intérieure de la languette forme une protubérance 42 dans l'évidement central de la cheville, de sorte que la languette sera repoussée vers l'extérieur par le fût 17 du clou 13 pour que la denture 41 morde dans la matière environnante. En outre, deux crans 43 sont ménagés dans la protubérance 42 pour constituer des moyens conjugués susceptibles de s'accrocher aux collerettes 18 du clou et bloquer ainsi le clou dans la cheville. Ce blocage est garanti au moins par la flexion des languettes 38, même si la matière environnante n'exerce que peu ou pas de pression sur ces languettes. Les positions respectives des crans 43 et des collerettes 18 peuvent être choisies de façon que, lorsqu'ils sont engagés les uns dans les autres, la tête 19 du clou 13 exerce une traction permanente sur l'embase 5, assurant ainsi une précontrainte de l'embase contre l'élément de support 3 et garantissant la stabilité du collier et de l'objet qui lui est fixé.

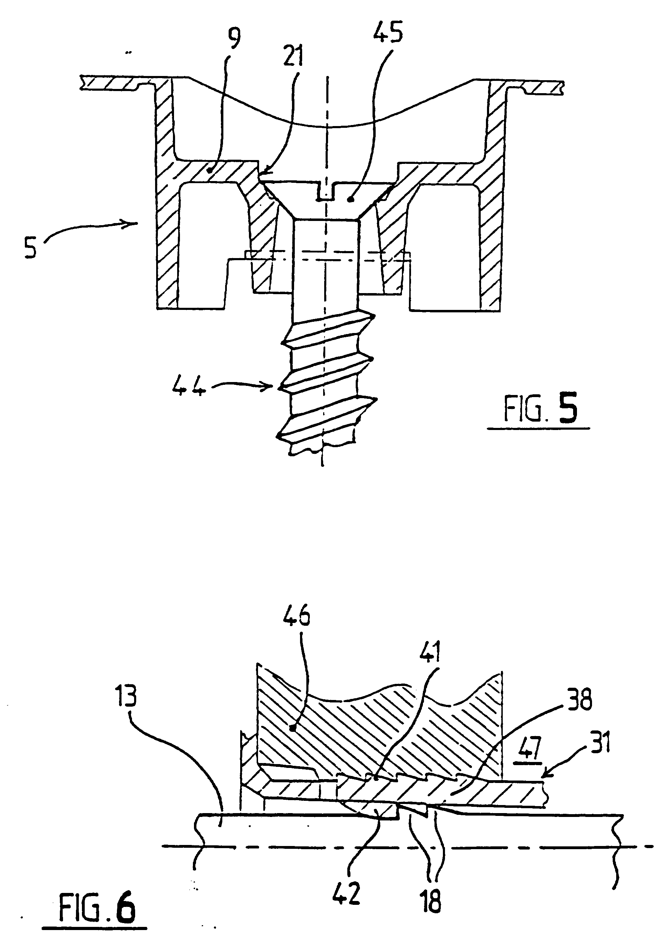

Dans la variante illustrée par la figure 5, le clou 13 n'a pas été utilisé, mais arraché manuellement ou au moyen d'un outil tel qu'une tenaille est remplacé par une vis à bois usuelle 44 de dimensions correspondantes à celles de la cheville, pour autoriser un démontage ultérieur du collier. La vis 44 a une tête fraisée 45 qui s'adapte sans difficulté dans le logement conique 21 prévu pour la tête du clou. Dans ce cas également, l'élasticité de la cloison intermédiaire 9 de l'embase 5 garantit une précontrainte permanente de cette embase contre l'élément de support.

La figure 6 illustre schématiquement un cas où le collier est fixé à un élément de support évidé tel qu'une brique creuse, de sorte que la cheville 31 du collier traverse complètement une paroi frontale 46 de cet élément, sa partie distale se trouvant alors dans une cavité 47 de l'élément. Dans ce cas, ce sont les languettes élastiques 38 qui assurent intégralement le maintien de la cheville, au moyen de leur denture extérieure 41 repoussée fortement vers l'extérieur par la pression du clou 13 sur la protubérance intérieure 42 de chaque languette. Les crans de cette protubérance, engagés sur les collerettes 18 du clou, assurent une retenue positive empêchant un arrachement intempestif du clou, même si celui-ci n'est pas bloqué en position dans la partie distale de la cheville.

La description qui précède montre que l'invention offre un collier de fixation polyvalent qui présente d'importants avantages fonctionnels par rapport aux colliers connus, grâce à une embase capable de maintenir un objet allongé tel qu'un tube ou un câble, de différentes dimensions, dans une position stable et à une distance définie de l'élément de support, quelle que soit la nature de celui-ci. La construction du collier garantit en outre le maintien de cette stabilité à long terme, notamment parce que l'embase permet d'employer un clou à tête et permet même une fixation démontable si l'on utilise une vis.

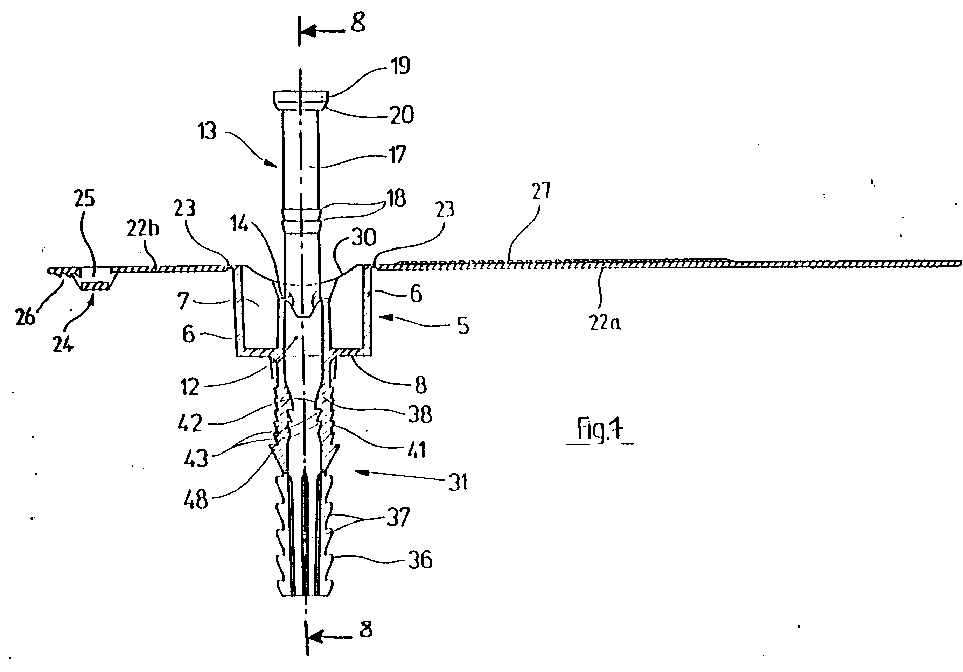

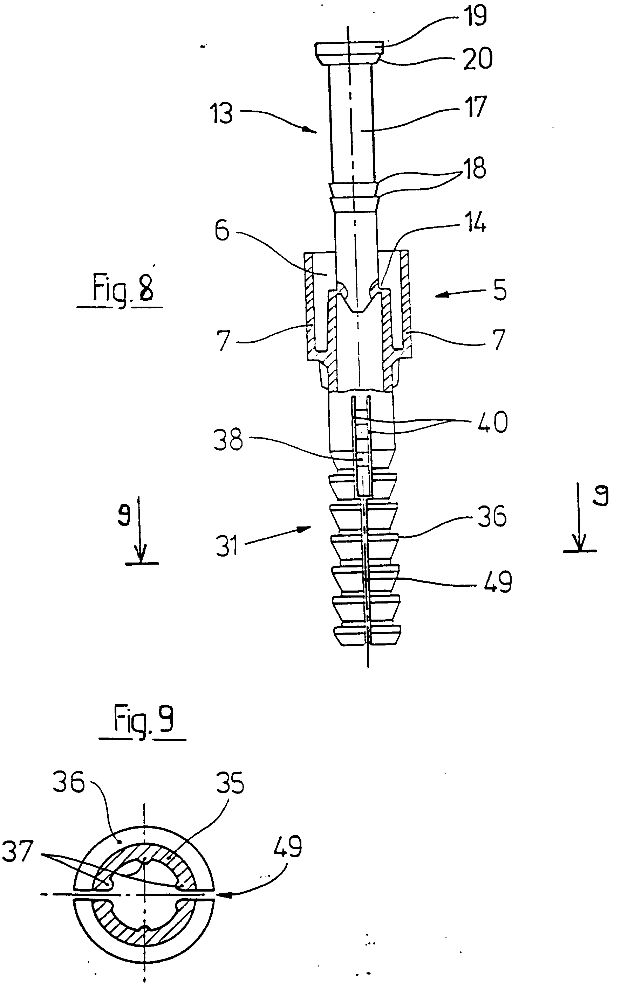

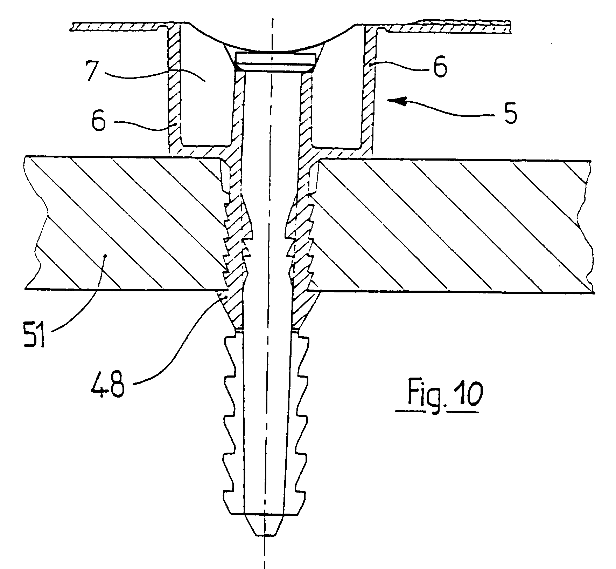

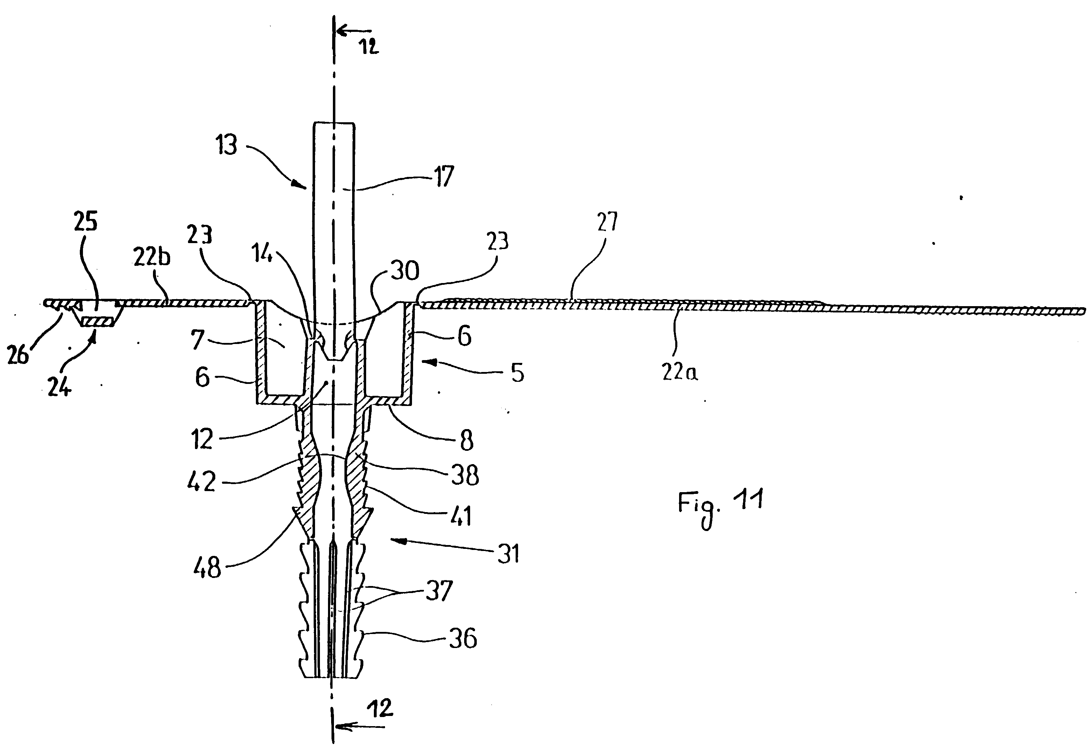

Selon la variante de réalisation illustrée aux figures 7 à 10, la cheville 31 est monobloc, et est rattachée directement au fond de l'embase 5. La surface latérale externe de la cheville 31 comporte un nez d'accrochage 48 situé au niveau de la languette flexible 38 et se trouvant en saillie par rapport aux dentures 36, 41. Lors de l'expansion de la cheville 31 après enfoncement du clou 13, le nez 48 s'accroche à l'arrière du panneau 51 (figure 10). Il en résulte une bonne tenue mécanique à l'arrachement, ce qui est indispensable dans le cas d'un panneau 51 creux, ou de faible épaisseur, comme du placoplâtre de 10 à 13 mm. Le démoulage est possible grâce à la présence de deux fentes 49,40 aménagées dans la cheville 31.

La première fente 40 délimite extérieurement la languette élastique 38, et la deuxième fente 49 prolonge axialement la fente 40 jusqu'au bout de la cheville 31. En plus de leur fonction de démoulage, les fentes 40, 49 autorisent également l'expansion de la cheville 31 lors de l'enfoncement du clou 13, aussi bien dans des matériaux pleins grâce aux nervures 37, et dans les matériaux creux grâce aux languettes flexibles 38 équipées du nez d'accrochage 48.

Le moulage de la cheville 31 en une seule pièce permet de supprimer la zone fragile constituée par les charnières 32 (figure 2) entre l'embase 5 et les deux demi-chevilles 31a, 31b. Le moulage de la cheville 31 s'effectue avantageusement dans l'axe du clou d'expansion.

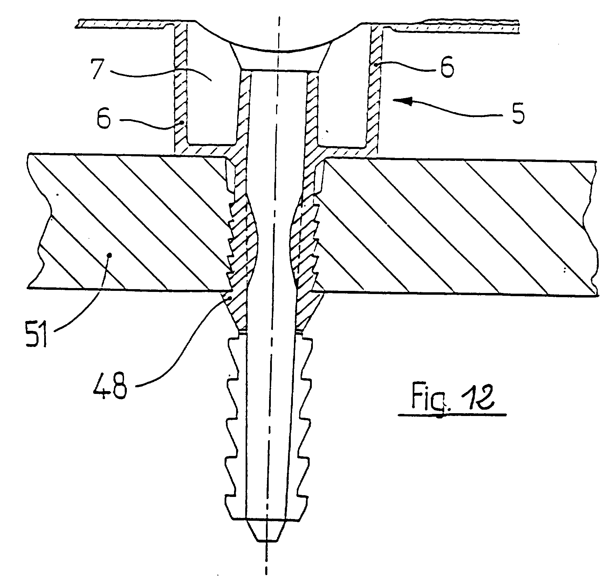

Selon la variation de réalisation illustrée aux figures 11 et 12, on peut supprimer la tête 19,20 et les ailettes (18) du clou, ainsi que les crans intérieurs (43) de la cheville (31) sans nuire à la tenue mécanique à l'arrachement de l'ensemble.

## Revendications

1. Collier à cheville intégrée pour la fixation murale, d'un conduit ou tube, formé d'un ensemble monobloc en matière synthétique injectée comprenant :
- une embase (5) pourvue d'une ouverture centrale (12), d'une surface d'appui arrière (8) destinée à être appliquée contre un élément de support (3), et d'une face avant destinée à servir d'appui audit conduit (1),
- deux brides souples (22a, 22b) rattachées chacune à un côté de l'embase et agencées pour coopérer pour entourer ledit conduit, les brides étant munies de moyens d'attache (24, 27) pour être liées l'une à l'autre de manière à former une boucle fermée,
- une cheville creuse (31) agencée pour être engagée dans un trou de l'élément de support,
- et un clou d'expansion (13) disposé dans l'ouverture centrale (12) de l'embase et agencé pour être chassé dans la cheville, le clou étant rattaché à l'embase par une liaison arrachable (14),
caractérisé en ce que:
- l'embase (5) est un bloc rigide ayant des parois latérales (6, 7) sensiblement perpendiculaires à sa surface d'appui (8) et comporte, une surface concave (30) adaptée audit conduit, et un logement (21) agencé pour recevoir la tête (19) du clou quand celui-ci est chassé dans la cheville,
- le clou d'expansion (13) est pourvu de moyens de retenue (18) agencés pour coopérer avec des moyens conjugués (43) de la cheville (31) pour retenir ledit clou dans ladite cheville.

2. Collier selon la revendication 1, caractérisé en ce que la cheville (31) comporte deux dentures extérieures décalées dans le sens de la longueur, à savoir une première denture (36) située sur une partie distale (35) en forme de coque semi-circulaire, et une seconde denture (41) située sur une languette flexible (38) située entre ladite partie distale et l'embase et rattachée à cette partie distale, ladite languette ayant une protubérance à l'intérieur de la cheville (42). et lesdits crans (43) étant disposés sur lesdites languettes élastiques (38).

3. Collier selon la revendication 1, caractérisé en ce que lesdites parois latérales (6, 7) comportent des bords arrière qui définissent ladite surface d'appui arrière (8), deux (7) des parois latérales, mutuellement opposées, présentant des bords avant incurvés (30) définissant ladite surface concave, et que l'embase (5) a la forme d'une boîte sensiblement rectangulaires, ayant deux parois latérales rectangulaires (6) disposées longitudinalement par rapport audit conduit, auxquelles sont rattachées respectivement les brides (22a, 22b) et deux parois transversales (7) reliant deux à deux lesdites parois latérales rectangulaires ayant lesdits bords avant incurvés.

4. Collier selon la revendication 3, caractérisé en ce que la cheville (16) est composée de deux demi-chevilles (31a, 31b) rattachées respectivement auxdites parois transversales (7), au niveau de ladite surface d'appui arrière (8).

5. Collier selon la revendication 4, caractérisé en ce que ledit logement (21) possède un profil sensiblement conique, susceptible de recevoir la tête (45) d'une vis (44) qui est employée à la place du clou.

6. Collier selon la revendication 1, caractérisé en ce que ledit logement (21) est ménagé dans un bloc intérieur (10) rattaché aux parois latérales de l'embase (5) par une cloison intermédiaire (9), ledit bloc intérieur (10) ayant une extrémité intérieure (11) qui, dans une position initiale antérieure à l'insertion du clou d'expansion, se trouve en retrait par rapport à ladite surface d'appui arrière (8) de l'embase (5).

7. Collier selon la revendication 1, caractérisé en ce que la tête (19) du clou d'expansion est à fleur de ladite surface concave (30) lorsque ledit clou d'expansion est chassé dans la cheville et sa tête disposée dans ledit logement de ladite embase (5).

8. Collier selon la revendication 1 ou 2, caractérisé en ce que la cheville (31) monobloc est rattachée directement au fond de l'embase (5), et que l'expansion de la cheville (31) est rendue possible par la présence de fentes (40, 49) s'étendant axialement dans la cheville (31).

9. Collier selon la revendication 8, caractérisé en ce que la première fente (40) délimite extérieurement la languette élastique (38), alors que la deuxième fente (49) prolonge la première fente jusqu'au bout de la cheville (31).

10. Collier selon la revendication 8 ou 9, caractérisé en ce que la surface latérale externe de la cheville (31) comporte un nez d'accrochage (48) en saillie par rapport aux première et deuxième dentures (36, 41), et destiné à venir s'accrocher contre la paroi postérieure du panneau lors de l'enfoncement du clou d'expansion (13).
